# EUROPEAN PATENT SPECIFICATION

(11) **EP 4 068 228 B1**
(45) Date of publication and mention of the grant of the patent: **12.06.2024**
(21) Application number: 22164831.4
(22) Date of filing: 28.03.2022
(51) Int. Cl.: G07C 9/00, E05B 63/20, E05B 47/06, E05B 17/00, E05B 59/00, E05B 47/00, E05C 9/00, E05B 17/10, E05B 15/00

(54) **IMPROVED DOOR LOCK**
VERBESSERTES TÜRSCHLOSS
SERRURE DE PORTE OPTIMISÉE

(30) Priority: 01.04.2021 GB 202104757
(43) Date of publication of application: 05.10.2022
(73) Proprietor: ERA Home Security Limited, Wolverhampton WV9 5GB (GB)
(72) Inventor: Sehdeva, Richard, Wolverhampton WV9 5GB (GB)
(74) Representative: Marks & Clerk LLP

(56) References cited:
- EP-A1- 3 330 461
- EP-A2- 1 650 381
- DE-A1- 10 129 349
- DE-A1- 19 514 742
- DE-A1-102015 121 175
- US-A1- 2003 155 778
- US-A1- 2013 285 393
- US-A1- 2018 030 757

## Description

### Field of Invention

The invention relates to lock assemblies for windows and doors. Specifically, the invention relates to a lock assembly comprising an automatic mechanism for extending at least one bolt and an electronic mechanism for allowing said bolt to be retracted.

### Background

Electronically controllable lock assemblies are known and used in securing doors or windows. These electronically controllable lock assemblies use an electric drive means to extend and retract a locking bolt to lock and unlock the window or door. Some electronically controllable lock assemblies also contain an authentication mechanism for verifying a user's identify e.g. by using biometric data, such as fingerprint sensors, voice recognition and/or facial recognition. Once a user's identity is verified by the authentication system, an electric drive means of the lock assembly is configured to disengage the locking bolt, thereby allowing the user to open the door or window.

More recently, lock mechanisms that use a mechanical trigger to automatically extend a locking bolt when a window or door is closed have been developed. Examples of such lock mechanisms are described in GB patent applications GB2584100 and GB2564225 by the present Applicant.

The documents US 2003/155778 A1, DE 195 14 742 A1, DE 101 29 349 A1 or EP 1 650 381 A2 disclose different types of locks assemblies comprising a mortise lock with a lock mechanism with at least one bolt and an automatic actuation mechanism comprising a trigger configured to fire the at least one bolt when the trigger is actuated. Said lock assemblies also comprise a spindle locking mechanism within the housing of the mortise lock, configured to prevent rotation of a spindle connectable to a handle when engaged, wherein said lock assemblies comprise an electronic mechanism for engaging and/or disengaging the spindle locking mechanism.

The document EP 3 330 461 A1 discloses a locking apparatus including handle means arranged such that movement of the handle means in a first direction actuates movement of one or more bolt means from an unlocked position to a locked position; spindle means provided in said handle means; spindle locking means movable relative to the spindle means between a spindle locking position and a spindle release position, wherein the locking apparatus further includes a security locking mechanism for preventing the spindle locking means from being moved from the spindle release position to the spindle locking position without the bolt means being in the locked position, and wherein the security locking mechanism may include electrical means, which are arranged so as to automatically move the spindle locking means from the spindle release position to the spindle locking position on detection of the bolt means in the locked position.

Supplying power to an electronically controllable lock assembly can be challenging. Some electronically controllable lock assemblies use batteries, but due to the relatively high energy demand of the lock assemblies, the batteries need to be replaced regularly. Other electronically controllable lock assemblies connect directly to a mains power supply but the wired connection to the lock assembly is difficult to achieve in a moving door leaf and also creates a security vulnerability.

The present invention attempts to resolve or ameliorate one or more of the problems with lock assemblies for windows and doors, or provide a useful alternative.

### Summary of Invention

According to a first aspect of the invention, there is provided a lock assembly according to claim 1. The lock assembly comprises a lock mechanism comprising at least one bolt and an automatic actuation mechanism comprising a trigger configured to fire the at least one bolt when the trigger is actuated. The lock assembly comprises a handle assembly comprising a first handle and a second handle, a spindle, connectable to the handles, and connected to the lock mechanism such that rotation of the spindle retracts the at least one bolt; and a spindle locking mechanism within the first handle and configured to prevent rotation of the spindle when engaged; wherein the lock assembly comprises an electronic mechanism for engaging and/or disengaging the spindle locking mechanism.

The trigger may be mechanical. The trigger may be non-electronic. The trigger may be non-magnetic. The trigger may be compressible or depressible. Firing the at least one bolt may comprise extending the at least one bolt. The spindle may be coupled to and/or integrally formed with the handle. The at least one bolt may be selectively movable between an extended and a retracted position. The at least one bolt may be a deadbolt. Advantageously, using an automatic actuation mechanism reduces the amount of electrical energy required to operate the lock mechanism and thus the lock assembly. Specifically, using the electronic mechanism to disengage the spindle locking mechanism rather than to retract or extend the at least one bolt reduces the electrical energy required to operate the lock assembly. By reducing the energy demands, the battery life of the system is significantly improved.

The electronic mechanism may comprise an authentication unit for verifying a user's identity. The authentication unit may comprise at least one of: a biometric sensor; a receiver; and/or a keypad. The biometric sensor may comprise a fingerprint sensor and/or a camera. The camera may be configured for facial and/or iris recognition. The biometric sensor may comprise a microphone e.g. for voice recognition. The receiver may comprise a radio wave receiver, radio-frequency identification (RFID) receiver, Bluetooth receiver, Bluetooth Low Energy (BLE) receiver, and/or a Wi-Fi receiver. The keypad may be electronic. The keypad may comprise a series of keys, buttons, and/or a touchscreen.

The authentication unit may be configured to receive an input from a user. The input may comprise biometric information e.g. a fingerprint. The biometric information may be automatically obtained as a user comes within a predetermined distance of the authentication unit e.g. via a camera or RFID system. Alternatively, the input may comprise a username, code, and/or a password. The input may comprise a wireless signal e.g. sent from a user equipment (UE). The UE may comprise a mobile telephone, a computer, a tablet, a keyfob or any other similar electronic device. The UE may be configured to send the signal to the receiver upon an action from a user. The action may comprise the user opening an application software. The action may comprise the user inputting information into the application software. The action may comprise the user connecting to Wi-Fi. The action may comprise the user connecting to a local area network (LAN). The action may comprise the user bringing the UE within a predetermined distance of the authentication unit.

The authentication unit may further comprise a memory. Alternatively, the memory may be stored remotely and connected to the authentication unit via a wired or a wireless interface. The memory may be configured to store user authentication information. The stored user authentication information may be used to verify the user's identity. The stored user authentication information may comprise the user's biometric data, a username, a password and/or a code.

The user's identity may be verified by comparing the received input to the stored user authentication information. A successful verification of the user's identity may involve detecting a match between the received input and the stored user authentication information.

The authentication unit may require a multi-factor authentication to verify the user's identity. For example, the authentication unit may require the user to input two or more of the biometric data, a username, a password and/or a code to successfully verify the user's identity. Advantageously, the use of multifactor authentication improves the security of the lock assembly.

The electronic mechanism may be configured to disengage the spindle locking mechanism upon receiving a signal from the authentication unit indicating a successful verification of the user's identity.

The spindle locking mechanism may comprise a restrictor portion configured to engage the spindle and prevent rotation thereof. The lock assembly may further comprise a biasing means configured to bias the restrictor portion into an engaged position e.g. wherein the restrictor portion is engaged with the spindle. The biasing means may be a spring. Additionally or alternatively, the restrictor portion may be configured to move into the engaged position under the force of gravity.

The electronic mechanism may further comprise an electric drive means. The electric drive means may be configured to move the restrictor portion into a disengaged position. The disengaged position may be a position in which the spindle is rotatable. Optionally, the electric drive means may move the restrictor portion into the engaged position.

Advantageously, using a biasing means and/or gravity to bias the restrictor portion into an engaged position ensures that the restrictor returns to the engaged position even if the electronic mechanism and/or the electric drive means fails.

In one series of embodiments, the electric drive means may comprise a motor. The electric drive means may comprise a power source e.g. a cell or battery. The cell or battery may be located within the handle assembly.

The electric drive means may comprise a power transfer mechanism connecting the motor and the restrictor portion. The power transfer mechanism may comprise a slotted link mechanism (scotch yoke). The restrictor portion may comprise a slot or channel. The power transfer mechanism may comprise at least one gear comprising a drive pin, receivable within the slot or channel. The slotted link mechanism may be configured such that rotation of the at least one gear drives linear motion of the restrictor portion. For example, the drive pin may apply a driving force to the sides or walls of the slot or channel to drive the linear motion of the restrictor portion.

The power transfer mechanism may comprise a gear or plurality of gears. The plurality of gears may comprise a bevel gear and an additional gear connected to the bevel gear. The additional gear may comprise the drive pin connected thereto.

In some embodiments, the electric drive means may comprise a servomotor or a linear actuator.

In some embodiments, the spindle may comprise a rotor coupled thereto. The rotor may be configured to rotate with the spindle e.g. such that relative rotation of the rotor on the spindle is prevented.

The rotor and the restrictor portion may comprise interlocking formations. The interlocking formations may prevent rotation of the rotor relative to the restrictor portion when the restrictor portion engages the rotor and/or spindle e.g. when the interlocking formations are engaged. The interlocking formations may comprise a tooth and a recess. The tooth may be provided on the restrictor portion and the recess may be provided on the rotor, or vice versa. Further alternatively, the interlocking formations may comprise a plurality of teeth and recesses.

The lock assembly may further comprise an orientation sensor. The orientation sensor may be configured to determine the orientation of the spindle. The orientation sensor may comprise a magnet coupled to the spindle. The orientation sensor may comprise a magnetic field sensor e.g. a hall sensor or a reed switch. The hall sensor or the reed switch may be configured to determine the position of the magnet. By detecting the position of the magnet, the hall sensor or the reed switch may be configured to determine the orientation of the spindle and thus determine whether the spindle has undergone rotation.

The electronic mechanism may be configured to prevent the spindle locking mechanism from engaging when the orientation sensor determines that the spindle is misaligned with the spindle locking mechanism. The spindle may be misaligned with the spindle locking mechanism when the spindle has undergone rotation with respect to the restrictor. The spindle may be misaligned with the spindle locking mechanism when the spindle is rotated away from its rest position. The rest position may be defined as a position in which no torque is applied to the spindle.

Advantageously, by preventing the spindle locking mechanism from engaging when the orientation sensor determines that the spindle is misaligned with the spindle locking mechanism, the electronic mechanism may prevent the spindle locking mechanism from being damaged.

The electronic mechanism may be configured to automatically engage the spindle locking mechanism after a predetermined amount of time. The predetermined amount of time may be a time required for a user to rotate the spindle, thereby retracting the at least one bolt, and return the spindle to its original position. The predetermined amount of time may be adjustable e.g. by a user according to the user's preference. By automatically engaging the spindle locking mechanism after a predetermined amount of time the door in which the assembly is fitted will automatically lock itself and the spindle locking mechanism is not left in a disengaged state indefinitely.

The automatic actuation mechanism may comprise a drive plate. The drive plate may be operatively connected to the trigger. The drive plate may be operatively connected to the at least one bolt. The drive plate may be configured such that firing the at least one bolt comprises the drive plate falling under gravity or a biasing mechanism to thereby drive the bolt into an extended position.

Actuation of the trigger (e.g. compression or depression) may initiate the movement of the drive plate. The drive plate may be operatively connected to the at least one bolt via a linkage. The linkage may comprise at least one link. The linkage may be configured to transfer the movement of the drive plate falling under gravity or the biasing mechanism into a movement of the at least one bolt. The movement of the at least one bolt may be perpendicular to the movement of the drive plate, and/or the movement of the at least one bolt may be a rotation. The lock mechanism may be configured such that rotation of the spindle lifts the drive plate. The trigger may retain the drive plate in a raised position until actuated e.g. until the trigger is compressed or depressed.

The lock mechanism may further comprise a lock cylinder operable by a key. The lock mechanism and the lock cylinder may be configured such that operation of the lock cylinder may extend and/or retract the at least one bolt.

Advantageously, using a lock cylinder to extend and/or retract the at least one bolt provides an alternative mechanism for operating the locking mechanism should the automatic actuation mechanism or the spindle locking mechanism fail, or should the power to the electronic mechanism fail or batteries run flat.

In one series of embodiments, the spindle may comprise a frangible portion. The frangible portion may be configured to break upon application of force greater than a predetermined value. The frangible portion may comprise at least one groove or at least one notch in the spindle. The groove or the notch may be perpendicular to the length axis of the spindle. The frangible portion may be located such that once broken a portion of the spindle is located within the handle assembly and connected to the lock mechanism and the spindle locking mechanism. Advantageously, the frangible portion ensures that excessive forces (e.g. from attackers trying to force the mechanism to disengage) are not transferred to the spindle locking mechanism, thereby damaging it.

The lock mechanism may further comprise a housing. The lock mechanism may comprise a spindle aperture positioned within the housing and configured for receiving the spindle therethrough. The frangible portion may be positioned such that, when broken, the spindle does not extend beyond the spindle aperture. The housing may comprise a gearbox. The trigger may be connected to or provided on the housing. Additionally or alternatively, the frangible portion may be positioned such that, when broken, an end of the spindle is flush with one of the surfaces of the housing.

The lock assembly may further comprise a stop means. The stop means may be configured to restrict removal of the spindle. The stop may comprise a projection extending from the spindle e.g. a pin. The stop means may be configured to prevent removal of the spindle in a first linear direction e.g. along the lengthwise axis of the spindle itself. The dimensions of the projection may be larger than the dimensions of the spindle aperture, thus preventing the spindle from being pulled through the spindle aperture.

Additionally or alternatively, the stop means may comprise a barrier portion in the handle assembly. The barrier portion may comprise a plate e.g. a reinforced plate. The barrier portion may be configured to block the removal of the spindle in a second linear direction along the lengthwise axis of the spindle opposite to the first direction. The barrier portion may abut an end of the spindle, so that the spindle is prevented from being pushed through the spindle aperture in the second linear direction.

The lock mechanism may further comprise at least one remote locking unit comprising a further bolt and a drive bar operatively connecting the remote locking unit and the automatic actuation mechanism.

In a second aspect of the invention, there is provided a door or window assembly comprising a lock assembly as described previously. The door or window assembly may comprise a frame and a door or window leaf. The lock assembly may be located in or on the door or window leaf e.g. on or in the leading end face of the door or window leaf. The door or window assembly may comprise at least one keep located in or on the frame for engaging the locking bolt of the lock assembly.

The lock assembly may be configured such that during a closing operation of the door or window assembly, the trigger is actuated when the door or window leaf is aligned with the frame. The trigger may be actuated by the keep. The door or window may be aligned with the frame when the door or window leaf is closed and/or when the bolt is aligned with the at least one keep. Firing the at least one bolt may comprise extending the at least one bolt into the keep. Retracting the at least one bolt may involve retracting the at least one bolt from the keep.

### Brief Description of the Figures

Embodiments of the invention will now be described, by way of example only, with reference to the following drawings, in which:
Figure 1 is an exploded perspective view of a lock assembly;
Figure 2 is an exploded perspective view of a first handle;
Figure 3 is an exploded rear perspective view of a first handle;
Figures 4a & 4b are rear views of a first handle;
Figure 5 is an exploded perspective view of a second handle;
Figure 6 is a perspective view of a spindle;
Figure 7 is a diagrammatic representation of an electronic mechanism for a lock assembly;
Figure 8 is a perspective view of a lock mechanism;
Figure 9a is a rear view of a lock mechanism; and
Figure 9b is a rear side view of a lock mechanism.

### Detailed Description

It will be understood that the use of terms such as up, down, left, right, clockwise and anticlockwise etc. are for descriptive purposes only to aid comprehension, and thus do not preclude alternative orientations or configurations of the disclosed invention.

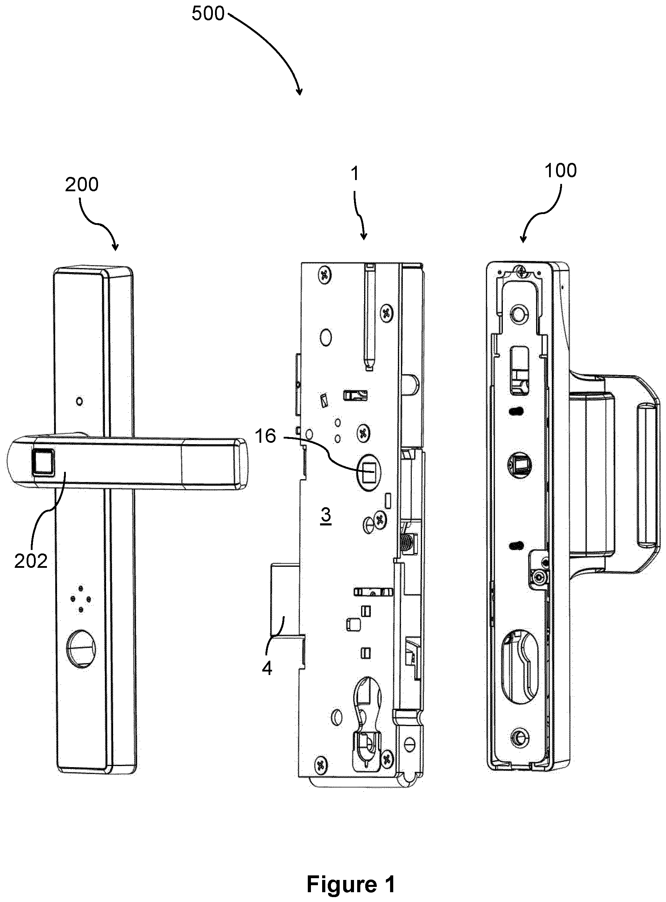

Turning now to Figure 1 there is shown a perspective view of a lock assembly 500. The lock assembly 500 comprises a lock mechanism 1 and a handle assembly. The handle assembly comprises a first handle 100 and a second handle 200. The first handle 100, the lock mechanism 1 and the second handle 200 are connected via a spindle (not shown) extending through a spindle aperture 16. The first handle 100 is connectable to an internal side of a door or window leaf (not shown). The second handle has a conventional lever handle 202 connected to the spindle. The second handle is connectable to an external side of a door or window leaf. The lock mechanism 1 has a cover plate 3 and can be recessed into an edge of a door or window leaf. In use, rotation of the lever handle 202 and the connected spindle is configured to retract the bolt 4.

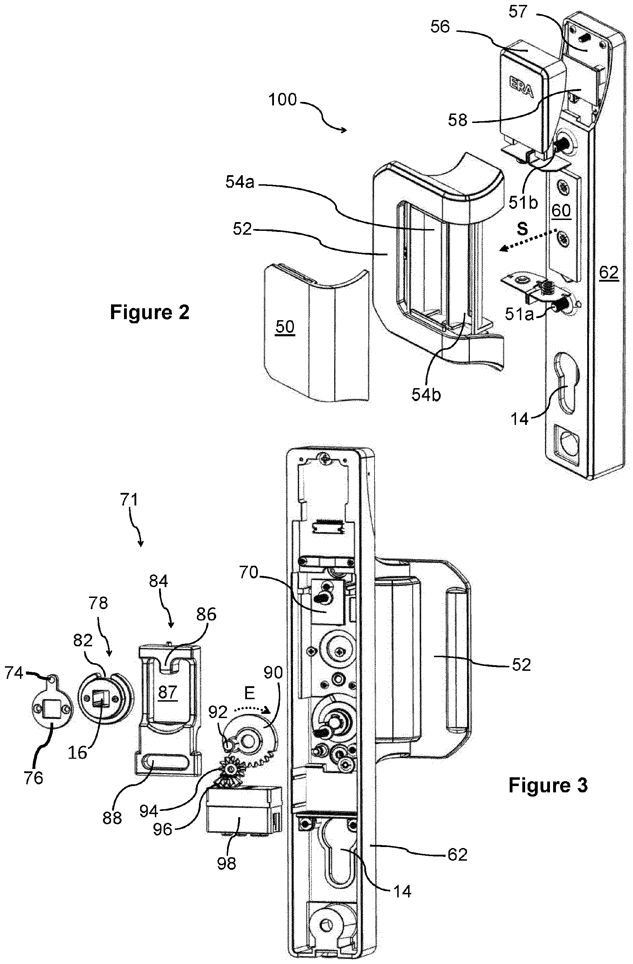

Turning now to Figure 2 there is shown a partially exploded front perspective view of the first handle 100. The first handle 100 comprises a pull handle 52 attached to a first handle body 62 via a first screw 51a and a second screw 51b. The pull handle 52 has two battery holders 54a and 54b configured to receive conventional cells/batteries (not shown) such as AA batteries. The pull handle 52 further comprises a battery cover 50, configured to cover the battery holders 54a and 54b. The first handle body 62 has a lock aperture 14 for receiving a cylinder lock (not shown). The first handle body 62 also houses an electronic mechanism, which has a printed circuit board (PCB) 57 comprising a microprocessor 58. Other electrical components are also connected to the electronic mechanism as described below. In use, the microprocessor 58 and the PCB 57 are covered with a snap-on plate 56.

The first handle 100 also comprises a spindle stop means 60, which has a reinforced plate connected to the first handle body 62 via mechanical fasteners. In use, the reinforced plate 60 abuts an end of the spindle extending through a spindle aperture 16 and thus prevents the spindle from being pushed through the first handle body 62 in a direction specified by the dashed arrow S.

Turning now to Figure 3, there is shown a partially exploded rear perspective view of the first handle 100. Figure 3 shows a spindle locking mechanism 71 housed within the first handle 100. The spindle locking mechanism 71 has a first rotor 78 and a restrictor 84. The first rotor 78 comprises a spindle aperture 16a with a corresponding square cross-section for receiving a spindle (not shown) therethrough. The spindle is thus coupled to the first rotor 78, so that the first rotor 78 rotates with the spindle. The restrictor 84 has a tooth 86, a rotor aperture 87 in which the first rotor 78 is located and a channel 88. The first rotor 78 has a recess 82 for receiving the tooth 86. Also housed within the first handle 100 there is a motor 98, a first bevel gear 96, a second bevel gear 94 and a clutch gear 90. The motor 98 is electrically connected to the batteries within the battery holders 54a and 54b. The first bevel gear 96 is connected to the motor 98 and the second bevel gear 94 is engaged with the first bevel gear 96, such that the first and second bevel gears are perpendicular. The second bevel gear 94 is engaged with the clutch gear 90. The clutch gear 90 comprises a protrusion in form of a pin 92, which slots into the channel 88 of the restrictor 84.

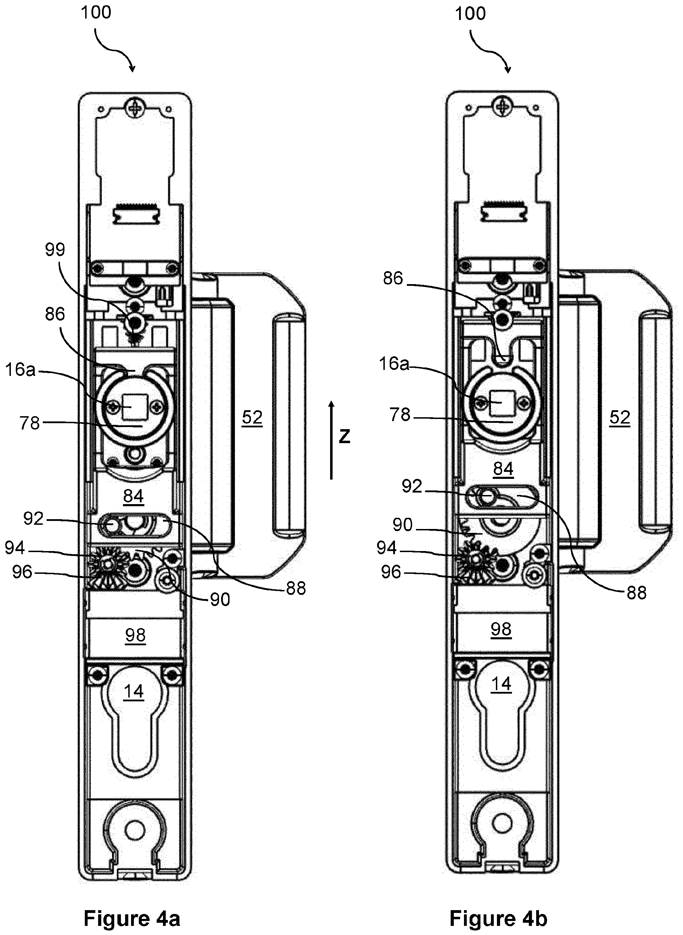

Operation of the spindle locking mechanism 71 will now be described with reference to Figures 4a and 4b. Figure 4a shows the spindle locking mechanism 71 in an engaged state, where the first rotor 78 and thus a spindle located within the spindle aperture 16a are prevented from rotating. Figure 4b shows the spindle locking mechanism 71 in a disengaged state, where the first rotor 78 and the connected spindle within the spindle aperture 16a are able to undergo rotation. Some elements of the first handle in Figures 4a and 4b have been removed to improve comprehension.

During operation, the first bevel gear 96 is driven by the motor 98 and subsequently drives the second bevel gear 94 and the clutch gear 90. The use of the bevel gears changes the rotation axis, allowing the motor to be mounted with a drive axis at 90° to the rotation axis of the clutch gear 90. This arrangement reduces the space required and thus reduces the size of the handle body 62. To disengage the spindle locking mechanism 71, the clutch gear 90 is rotated in a clockwise direction (shown as a dashed arrow E in Figure 3). As the clutch gear rotates, the pin 92 bears on the upper edge of the channel 88 and forces the restrictor 84 to move linearly upwards within the handle body 62, shown as direction Z in Figure 4a. As the restrictor 84 moves upwards, the tooth 86 of the restrictor 84 disengages the recess 82 of the first rotor 78, as shown in Figure 4b. In this disengaged state, the first rotor 78 and thus the spindle are allowed to rotate, unobstructed by the tooth 86 of the restrictor 84.

To engage the spindle locking mechanism 71, the motor is run in the opposite direction, causing the clutch gear 90 to rotate in an anticlockwise direction. As the clutch gear 90 rotates, the pin 92 bears on the internal lower edge of the channel 88 and forces the restrictor 84 to move linearly downwards, in an opposite direction to direction Z. As the restrictor 84 moves downwards, the tooth 86 of the restrictor 84 engages the recess 82 of the first rotor 78, as shown in Figure 4a. In this engaged state the first rotor 78, and thus the spindle, is prevented from rotating.

The spindle locking mechanism 71 may be engaged via gravity and/or due to a force exerted by a conical spring 99 attached to the first handle body 62. As the restrictor portion 84 is moved upwards (in direction Z), the top of the restrictor 84 compresses the conical spring 99. The biasing force exerted by the conical spring 99 and gravity is sufficient to force the restrictor 84 downwards (in direction opposite to direction Z) into the engaged state shown in Figure 4a. This is especially advantageous in situations where the motor 98 fails e.g. if the battery runs flat leaving the motor without a power source. Should the motor 98 fail, the spindle locking mechanism can automatically return to the engaged state. If the spindle locking mechanism 71 were to remain in the disengaged state, the spindle could be rotated to operate the lock mechanism 1 and thus open the door to which it is fitted.

The spindle locking mechanism 71 is configured to automatically return to the engaged state after a predetermined amount of time. The motor 98 is configured retain the restrictor 84 in the disengaged state for a predetermined amount of time and engage the spindle locking mechanism 71 after a predetermined amount of time has passed. The motor 98 drives the restrictor upon receiving a signal from the electronic mechanism described below. The predetermined amount of time can be adjusted by the user, and optionally deactivated by the user if they wish to prevent being locked out while still present.

Referring back to Figure 3, the first handle assembly 100 has an orientation sensor, which detects the orientation of the spindle slotted into the spindle aperture 16. The orientation sensor has a hall sensor 70 connected to the first handle body 62, a second rotor 76 with a magnet 74 and an electronic mechanism (described below) used to interpret data generated by the hall sensor 70. The second rotor 76 is connected to the first rotor 78, and thus the second rotor 76 is configured to rotate with the first rotor 78 and the spindle. The spindle can rotate the second rotor 76 and the magnet 74, which changes the strength of the magnetic field at the hall sensor 70. The hall sensor 70 detects the changing magnetic field and sends a signal to the electronic mechanism, which interprets the data to determine the orientation of the magnet and thus the spindle, at a given point in time.

The electronic mechanism prevents the motor 98 from returning the spindle locking mechanism 71 into the engaged state after the predetermined amount of time if the orientation sensor determines that a spindle and the restrictor 84 are misaligned i.e. when the recess 82 of the rotor 78 is rotated relative to the tooth 86 of the restrictor 84.

Attempting to return the spindle locking mechanism 71 into the engaged state when the rotor 78 is misaligned with the restrictor 84 can result in damage to the spindle locking mechanism 71, the gears (96, 94 and 92) and the motor 98. For example, if the restrictor 84 is moved downwards (in direction opposite to the direction Z shown in Figure 4a) when the rotor 78 has been rotated, the tooth 86 of the restrictor 84 does not slot into the recess 82 of the rotor 78 as required during normal operation of the spindle locking mechanism 71. Instead, the tooth 86 bears on the outer circumferential surface of the rotor 78. If the restrictor 84 is prevented from moving downwards by the outer circumferential surface of the rotor 78, the motor can cause the gears (96, 94 and 92) to skip which can wear or even shear the gear teeth.

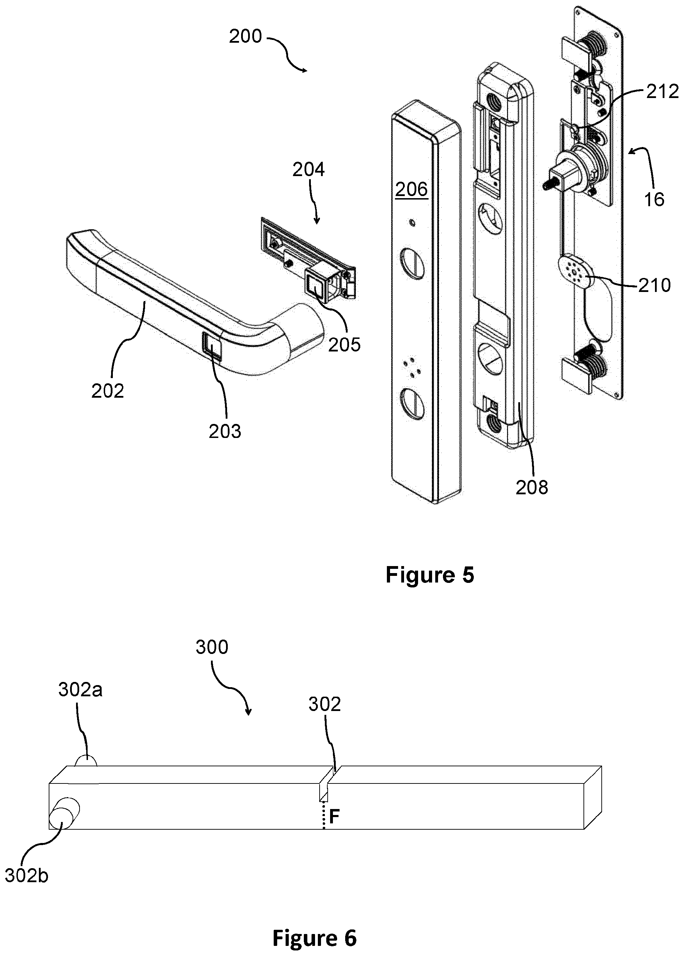

Turning now to Figure 5 there is shown a partially exploded perspective view of the second handle 200. The second handle assembly 200 has a lever handle 202, a fingerprint scanner 204, second handle casing 206, a reinforced body 208, a speaker 210 and an LED light 212. The fingerprint scanner 204 is housed within the lever handle 202. The lever handle 202 comprises a finger aperture 203 through which a capacitive fingerprint reader 205 can be accessed. The reinforced body 208 is made out of a hardened cast stainless steel. Located behind the reinforced body 208 there is provided an LED light 212 and a speaker 210. The LED light 212 acts as indicator to signal to the user that the spindle locking mechanism 71 has been disengaged.

In operation, a user would grasp the lever handle 202 and place their finger or thumb on the capacitive fingerprint reader 205. The capacitive fingerprint reader 205 then proceeds to scan the fingerprint and sends the fingerprint data to an authentication unit (described below). The position of the capacitive fingerprint reader 205 is especially advantageous, since it allows a user to grab the lever handle 202 and present their finger or thumb to the capacitive fingerprint reader 205 in a single motion. This is in contrast to conventional door locks that often comprise fingerprint scanners, which are spaced away from the door handle. In such configuration, the user is forced to present their fingerprint to the fingerprint reader and subsequently move their hand to grasp the handle, creating delays in opening the door.

Turning now to Figure 6, there is shown a perspective view of a spindle 300 for use in the lock assembly 500. The first handle 100, the lock mechanism 1 and the second handle 200 can be connected together via the spindle 300 slotted through the spindle aperture 16. The spindle 300 is elongate and substantially cuboidal and has a square cross-section. The spindle 300 also comprises a frangible portion shown as a dotted line F formed by a groove 302 in the body of the spindle 300.

In use, the spindle 300 is connected to the lever handle 202 through the spindle aperture 16. As the lever handle 202 is rotated, the spindle rotates accordingly. The depth of the groove 302 is calculated such that the frangible portion F breaks upon application of a predetermined amount of force. For example, if an attacker attempts to forcibly rotate the lever handle 202 or spindle 300 when the spindle locking mechanism 71 is still in the engaged state, the exerted force would exceed the predetermined amount and the spindle 300 would break preferentially at the frangible portion F. The predetermined amount of force is calculated such that, in normal operation, the spindle would remain intact. The frangible portion F thus protects the spindle locking mechanism 71 as well as the lock mechanism 1.

Referring to Figures 1 and 6, the frangible portion F is also positioned along the body of the spindle 300 such that, when broken, a portion of the spindle 300 is retained within the lock mechanism 1 of the lock assembly 500 and connected to the spindle locking mechanism 71 within the handle 100. The frangible portion F is also positioned such that, when broken, the broken end of the spindle 300 sits flush with the front cover plate 3 of the lock mechanism 1.

The spindle has a spindle stop means in a form of protrusions 302a and 302b. The protrusions 302a and 302b extend from the spindle and have a width greater than the spindle aperture 16. The protrusions 302a and 302b prevent the spindle 300 from being pulled through the rotor 78 and the spindle aperture 16. To install the spindle, the handles 100, 200 are mounted on the door and the spindle is inserted through the handle body 62, before the plate 60 is secured over the end to prevent the spindle from being pushed backwards through the assembly.

In some situations, an attacker could try to remove the broken spindle 300 in order to insert a second spindle. The second spindle may subsequently be forcibly rotated to operate the lock mechanism 1 to retract the lock bolt 4. The positioning of the frangible portion F makes it harder for an attacker to remove the broken spindle 300, since the broken spindle does not have a protruding portion extending from the front cover plate 3 of the lock mechanism 1, which could be easily gripped and pulled. Even if the attacker succeeded in gripping the broken spindle 300, the protrusions 302a and 302b would prevent the broken spindle 300 from being pulled through the spindle aperture 16. In some embodiments, the attacker may attempt to remove the broken spindle 300 by pushing it through the spindle aperture 16 and the first handle 100. However, the reinforced plate 60 acts to prevent the spindle 300 from being pushed through the first handle body 62. The frangible portion F, the protrusions 302a and 302b and the reinforced plate 60 act to improve the security of the lock assembly 500, and prevent removal of the broken spindle portion from the external side of the handle assembly.

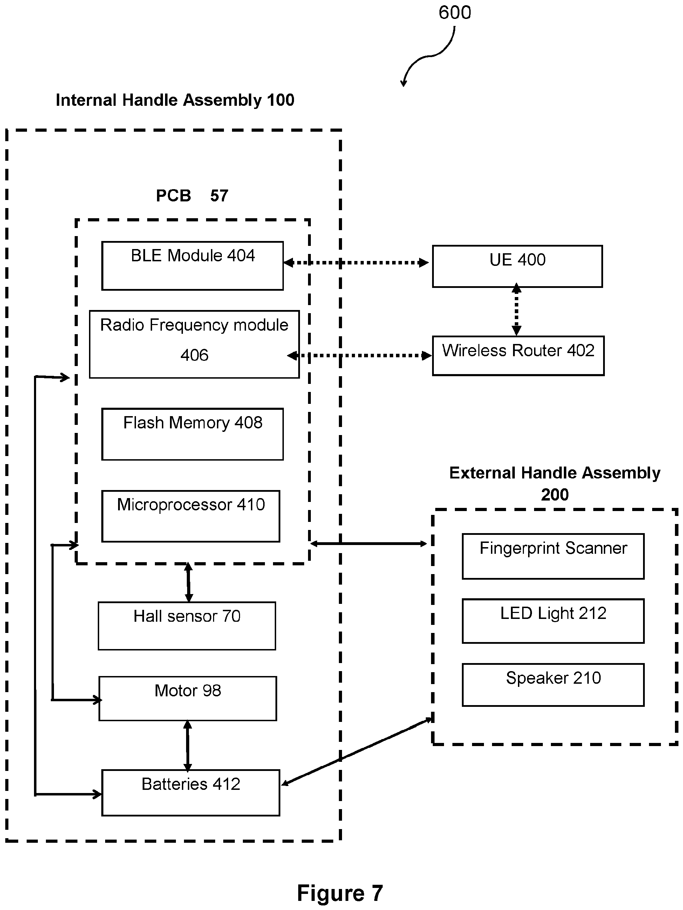

Turning to Figure 7, there is provided a diagrammatic representation of an electronic mechanism 600, which operates the spindle locking mechanism 71 (shown in Figure 3). The electronic mechanism 600 comprises a plurality of elements, some of which have been shown in the previously discussed Figures. The electronic assembly 600 is located in the first handle 100 and the second handle 200. In Figure 7, the dashed arrows represent wireless communication interfaces between the electronic elements and the conventional arrows represent wired communication interfaces between the electronic elements.

The first handle 100 comprises a PCB 57, the hall sensor 70, the motor 98 and batteries 412 located within the respective battery holders 54a, 54b. The PCB 57 comprises a Bluetooth-low energy (BLE) module 404 for communicating with a user equipment (UE) 400, a radio frequency module 406 (for example 868 fsk module) for communicating with a wireless router 402, a flash memory 408 and a microprocessor 410. The flash memory is configured to store fingerprint data belonging to authorized users. The UE may be a mobile phone, a tablet, a portable computer, keyfob or any similar electronic device. The motor 98, the batteries 412 and the hall sensor 70 are each connected to the PCB 57 through wired connections. The motor 98 is also directly connected to the batteries 412, which provides a power source for the motor. The second handle 200 comprises the fingerprint scanner 204, the LED light and the speaker 210 (shown in Figure 5).

Some components of the electronic mechanism 600 form an authentication unit for verifying a user's identity. The authentication unit is formed by the PCB 57, the fingerprint scanner 204 and the speaker 210.

A user may confirm their identity by using the fingerprint scanner 204. In operation, the user places their finger or thumb on the fingerprint scanner 204. The fingerprint scanner 204 collects the fingerprint data sends it to the microprocessor 410 located within the PCB 57. The microprocessor 410 compares the input fingerprint data to fingerprint data previously stored in the flash memory 408. If the microprocessor 410 determines that the input fingerprint data matches the stored fingerprint data, the microprocessor 410 successfully identifies the user. If the microprocessor 410 determines that the input fingerprint data does not match the stored fingerprint data, the microprocessor 410 fails to successfully identify the user. If the microprocessor 410 successfully identifies the user, the microprocessor 410 sends a signal to the motor 98, instructing the motor to disengage the spindle locking mechanism 71. The spindle locking mechanism 71 is moved into the disengaged state as previously described with reference to Figures 4a and 4b.

A user can also confirm their identity by using the BLE module 404 and the UE 400. In operation, the user opens an application on their UE 400. The application instructs the UE 400 to send a BLE signal to the BLE module 404 to establish a connection between the UE 400 and the BLE module 404. Once a connection is established, the speaker 210 is configured to emit a "beep" noise to indicate to the user that a successful connection is established. Once a successful connection is established, the application sends a BLE signal to the BLE module 404 confirming the user's identity. The received BLE signal is sent from the BLE module 404 to the microprocessor 410 and the microprocessor 410 sends a signal to the motor 98, instructing the motor to disengage the spindle locking mechanism 71. The application may further request that the user enters a correct username, password and/or a code before the application sends a BLE signal to the BLE module 404 confirming the user's identity.

A user can also confirm their identity by using the radio frequency module 406, the wireless router 402 and the UE 400. In operation, the user opens an application on the UE 400 which is configured to send a signal confirming the user's identity to the wireless router 402 (e.g. by using Wi-Fi). The wireless router 402 subsequently transmits the signal confirming the user's identity to the radio frequency module 406. The received radio frequency signal is sent from the radio frequency module 406 to the microprocessor 410 and the microprocessor 410 sends a signal to the motor 98, instructing the motor to disengage the spindle locking mechanism 71.

Two or more of the above processes can be combined to create a method of multi-factor authentication. Advantageously, the multi-factor authentication ensures that user's credentials are not easily compromised.

The microprocessor 410 is also configured to send a signal to the motor 98 instructing the motor 98 to return the spindle locking mechanism 71 to the engaged state after a predetermined amount of time. The user can reprogram the microprocessor using an application on the UE 400 to adjust the value of the predetermined amount of time. The microprocessor is also configured to process and interpret the output data received form the hall sensor 70 to determine the spindle orientation, as described previously. If the microprocessor determines that the spindle 300 and the restrictor 84 are misaligned, it will refrain from sending the motor 98 the signal with instructions to return the spindle locking mechanism 71 into the engaged state.

The described handle assembly, which comprises the first handle 100 and the second handle 200, is particularly advantageous as it allows a user to enjoy the benefits of an electronically controllable lock, while minimising the amount of electrical energy required for operating said lock. As the handle 202 is rotated, the spindle rotates accordingly and retracts a bolt (e.g. bolt 4). The work required for retracting the bolt 4 is generated by the user manually turning the lever handle 202. As such, retracting the bolt does not drain the electrical energy supply of the lock assembly 500.

Simultaneously, the electronic mechanism 600 controls when the bolt 4 may be retracted, thus ensuring that only an authorised user is able to open the door. The electronic mechanism controls when the bolt may be retracted by using the spindle locking mechanism 71. The energy required to move the spindle locking mechanism 71 from the engaged state to the disengaged state and vice versa is minimal. Therefore, the lock assembly can operate using a minimal amount of energy supplied by the batteries 412. The lifetime of these batteries 412 is thus prolonged.

Referring back to Figure 1, the handle assembly comprising the first handle 100 and the second handle 200 may be used with a range of different lock mechanisms. A particularly advantageous lock mechanism 1, which further reduces the energy needed for operation of the whole lock assembly 500, is described in GB patent applications GB2584100 and GB2564225 by the present Applicant.

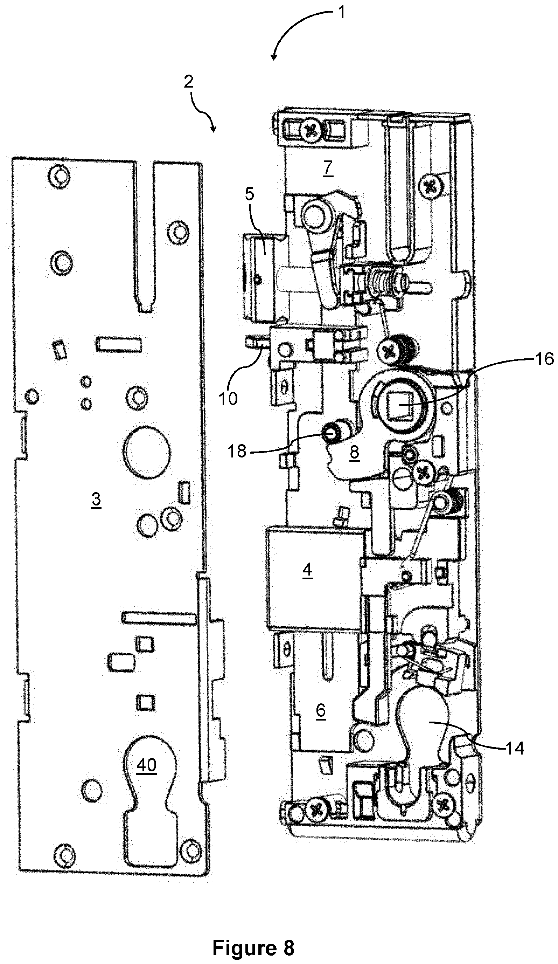

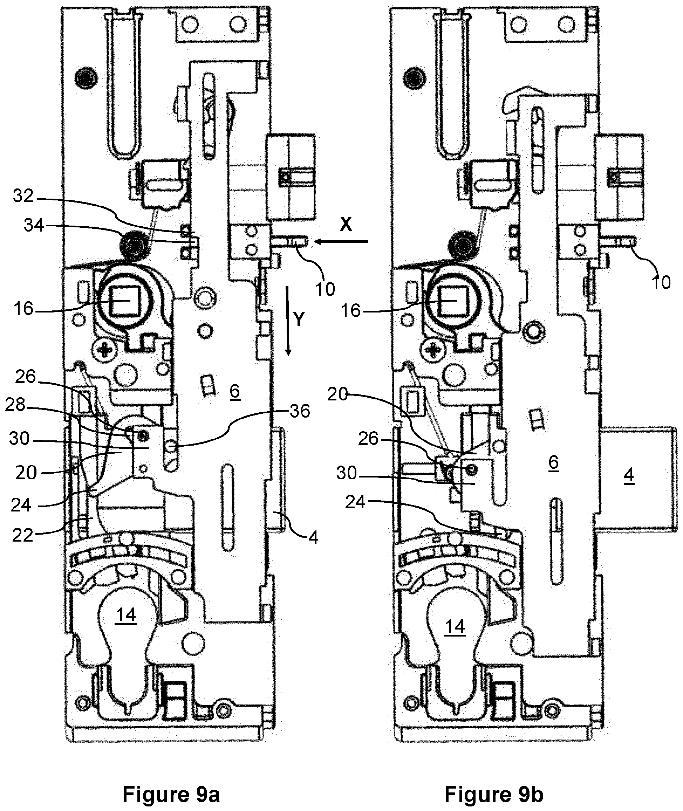

The structure and operation of the lock mechanism 1 will now be briefly described with reference to Figures 8, 9a and 9b. Turning now to Figure 8, there is shown a partially exploded view of the lock mechanism 1. The lock mechanism 1 comprises a housing 2, which has a substantially cuboidal shape and is configured to be recessed into an edge of a door (not shown). The housing 2 houses a bolt 4 and a sprung latch 5. The bolt 4 is shown in a retracted position within the housing 2. The housing 2 also has a follower with a spindle aperture 16 for receiving a spindle (not shown) therethrough. The follower is connected to a spindle lever 8. On the leading face of the housing 2, there is provided a trigger 10, operatively connected to a drive plate 6, which is subsequently connected to the bolt 4 as described below. Extending perpendicularly from the drive plate 6 there is a drive plate pin 18. The drive plate pin 18 is liftable by the spindle lever 8 during operation. The housing 2 has a lock aperture 14 in which a lock cylinder (not shown), such as a euro-profile cylinder can be located.

The lock mechanism 1 may further comprise a remote locking unit (not shown) to form a multi-point lock. The remote locking unit is operatively connected to the automatic actuation mechanism via a drive bar (not shown) connected to drive plate 6.

Figures 9a and 9b show the rear side of the lock mechanism 1 with parts of the housing 2 removed. In Figure 9a, the lock mechanism 1 is primed for actuation. In Figure 9a, the bolt is in a retracted position. Figure 9b shows the lock mechanism 1 after it has been actuated and the bolt 4 has been driven into an extended position.

The trigger 10 is configured to be depressed upon closing of the door in which the lock mechanism is installed. The trigger 10 has a tooth 34 at its rear end, which engages a shoulder 32 provided on the drive plate 6. The trigger 10 comprises a biasing means (not shown) which biases the trigger into the primed position portrayed in Figure 9a. The tooth 34 prevents the drive plate 6 from moving downwards (i.e. in the direction Y). When the trigger 10 is depressed, the trigger 10 and thus the tooth 34 are pushed back into the housing 2 i.e. the trigger 10 and tooth 34 move in the direction X. Once the tooth 34 is moved beyond the shoulder 32, the drive plate 6 is no longer retained in a raised position and can drop in the direction Y under the power of gravity. In some embodiments (not shown) there may be a biasing mechanism (such as a spring) to assist the downward motion of the drive plate 6.

The automatic actuation mechanism further comprises a linkage in the form of a pivot arm 20 operatively connecting the drive plate 6 and the bolt 4. The pivot arm 20 has a pivot pin 36 connected to the housing 2, around which the pivot arm is rotatable. The pivot arm 20 has a drive pin 24, which is received within a channel 22 in the rear end of the bolt 4. The drive plate 6 is provided with an arm 30 that comprises a projection 26 which engages an aperture 28 in the pivot arm 20.

As the drive plate 6 falls in direction Y, the projection 26 of the arm 30 bears on the internal edge of the aperture 28 of the pivot arm 20 causing the pivot arm 20 to rotate about the pivot pin 36. As the pivot arm 20 rotates through an arc, the drive pin 24 bears on the internal surface of the slot 22 and drives the bolt in the direction X, thereby extending it. The movement of the drive plate 6 drives any remote locking units connected to the locking mechanism 1.

To retract the bolt 4 and to reset the automatic actuation mechanism, the user lifts the drive plate 6. The user rotates a handle connected via a spindle to the follower and the spindle lever 8. The spindle lever 8 lifts the drive plate pin 18 to lift the drive plate 6. The rising drive plate 6 reverses the movement of the pivot arm 26, which thus pulls the bolt 4 into the retracted position. The lifting motion of the drive plate 6 can also retract at least one further bolt located in a remote locking unit in a conventional manner.

The bolt and any further bolts located in remote locking units can also be actuated by operating a lock cylinder located in the lock aperture 14, as described, for example, in GB2564225. Thus, if the batteries 412 fail and the spindle locking mechanism 71 is engaged, the user is still able to retract the bolt and one or more further bolts by using a conventional key. This prevents the user from being unable to operate the mechanism should the power or the automatic actuation mechanism fail.

The specific combination of the described lock mechanism 1 with the previously described handle assembly is advantageous since the lock mechanism 1 is mechanically fired upon closing the door and does not require electrical energy to operate. Thus, the high energy demands of driving the extension and retraction of the bolt 4 or any remote locking units is completely negated. This further preserves the energy reserves of the batteries 412 used within the lock assembly 500, and thus provides an electronic lock mechanism (e.g. which does not require a key) with the high security benefit of an multi-point lock and with a significantly extended battery life.

## Claims

1. A lock assembly (500) comprising:
a lock mechanism (1) comprising:
at least one bolt (4); and
an automatic actuation mechanism comprising a trigger (10) configured to fire the at least one bolt (4) when the trigger (10) is actuated; and
a handle assembly comprising:
a first handle (100) and a second handle (200),
a spindle (300), connectable to the handles (100, 200), and connected to the lock mechanism (1) such that rotation of the spindle (300) retracts the at least one bolt (4); and
a spindle locking mechanism (71) within the first handle (100) and
configured to prevent rotation of the spindle (300) when engaged;
wherein the lock assembly (500) comprises an electronic mechanism (600) for engaging and/or disengaging the spindle locking mechanism (71).

2. The lock assembly according to claim 1, wherein the electronic mechanism (600) comprises an authentication unit for verifying a user's identity, the authentication unit comprising at least one of: a biometric sensor; a receiver; and/or a keypad; and optionally, wherein the electronic mechanism (600) is configured to disengage the spindle locking mechanism (71) upon receiving a signal from the authentication unit indicating a successful verification of the user's identity.

3. The lock assembly according to any one of the preceding claims, wherein the spindle locking mechanism (71) comprises a restrictor portion (84) configured to engage the spindle (300) and prevent rotation thereof, and further comprising a biasing means (99) configured to bias the restrictor portion (84) into an engaged position wherein the restrictor portion (84) is engaged with the spindle (300).

4. The lock assembly according to claim 3, wherein the electronic mechanism (600) further comprises an electric drive means configured to move the restrictor portion (84) into a disengaged position in which the spindle (300) is rotatable, and
wherein the electric drive means comprises a motor (98), a power source (412), and a power transfer mechanism, wherein the power transfer mechanism comprises at least one gear (90, 94, 96) connecting the motor (98) and the restrictor portion (84), and optionally
wherein the restrictor portion (84) comprises a slot or channel (88) and the at least one gear (90) comprises a drive pin (92) receivable within the slot or channel (88) and configured such that rotation of the at least one gear (90) drives linear motion of the restrictor portion (84).

5. The lock assembly according to claim 3 or 4, wherein the spindle (300) comprises a rotor (78) coupled thereto, and wherein the rotor (78) and restrictor portion (84) comprise interlocking formations (82, 86) which prevent relative rotation when the restrictor portion (84) engages the spindle (300).

6. The lock assembly according to any one of the preceding claims, further comprising an orientation sensor configured to determine the orientation of the spindle, wherein the orientation sensor comprises:
a magnet (74) coupled to the spindle (300), and
a hall sensor (70) or reed switch configured to determine the position of the magnet (74).

7. The lock assembly according to claim 6, wherein the electronic mechanism (600) is configured to prevent the spindle locking mechanism (71) from engaging when the orientation sensor determines that the spindle (300) is misaligned with the spindle locking mechanism (71).

8. The lock assembly according to any one of the preceding claims, wherein the electronic mechanism (600) is configured to automatically engage the spindle locking mechanism (71) after a predetermined amount of time.

9. The lock assembly according to any one of the preceding claims, wherein the automatic actuation mechanism comprises a drive plate (6) operatively connected to the trigger (10) and the at least one bolt (4), and configured such that the firing the at least one bolt (4) comprises the drive plate (6) falling under gravity or a biasing mechanism to thereby drive the bolt (4) into an extended position, and wherein the lock mechanism (1) is configured such that rotation of the spindle lifts the drive plate (6), and wherein the trigger (10) retains the drive plate (6) in a raised position until actuated.

10. The lock assembly according to any one of the preceding claims, wherein the lock mechanism (1) comprises a lock cylinder operable by a key, and wherein the lock mechanism (1) and lock cylinder are configured such that operation of the lock cylinder extends and/or retracts the at least one bolt (4).

11. The lock assembly according to any one of the preceding claims, wherein the spindle (300) comprises a frangible portion (302) configured to break upon application of a force greater than a predetermined value, and wherein the frangible portion (302) is located such that once broken, a portion of the spindle (300) is located within the handle assembly and connected to the lock mechanism (1).

12. The lock assembly according to claim 11, wherein the lock mechanism (1) comprises:
a housing (2); and
a spindle aperture (16) positioned within the housing (2), for receiving the spindle (300) therethrough; wherein the frangible portion (302) is positioned such that, when broken, the spindle (300) does not extend beyond the spindle aperture (16).

13. The lock assembly according to any one of the preceding claims, comprising a stop means configured to restrict removal of the spindle (300), wherein the stop means comprises:
a projecting portion (302a, 302b) extending from the spindle; and/or
a barrier portion (60) in the handle assembly.

14. The lock assembly according to any one of the preceding claims, wherein the lock mechanism (1) comprises:
at least one remote locking unit comprising a further bolt; and
a drive bar operatively connecting the remote locking unit and the automatic actuation mechanism.

15. A door or window assembly comprising a lock assembly according to any one of the preceding claims.

## Patentansprüche

1. Schlossanordnung (500), Folgendes umfassend:
einen Schlossmechanismus (1), Folgendes umfassend:
mindestens einem Riegel (4); und
einen automatischen Betätigungsmechanismus umfassend einen Abzug (10), der konfiguriert ist, um den mindestens einen Riegel (4) auszulösen, wenn der Abzug (10) betätigt wird; und
eine Griffanordnung, die Folgendes umfasst:
einen ersten Griff (100) und einen zweiten Griff (200),
eine Spindel (300), die mit den Griffen (100, 200) verbindbar ist und die mit dem Schlossmechanismus (1) verbunden ist, sodass eine Drehung der Spindel (300) den mindestens einen Riegel (4) zurückzieht; und
einen Spindelverriegelungsmechanismus (71) innerhalb des ersten Griffs (100), und der konfiguriert ist, um eine Drehung der Spindel (300) zu verhindern, wenn er in Eingriff ist,
wobei die Schlossanordnung (500) einen elektronischen Mechanismus (600) zum In-Eingriff- und/oder Außer-Eingriff-Bringen des Spindelverriegelungsmechanismus (71) umfasst.

2. Schlossanordnung nach Anspruch 1, wobei der elektronische Mechanismus (600) eine Authentifizierungseinheit zum Verifizieren der Identität eines Benutzers umfasst, wobei die Authentifizierungseinheit mindestens eines von Folgendem umfasst: einen biometrischen Sensor; einen Empfänger; und/oder ein Tastenfeld; und optional wobei der elektronische Mechanismus (600) konfiguriert ist, um den Spindelverriegelungsmechanismus (71) beim Empfangen eines Signals von der Authentifizierungseinheit, das eine erfolgreiche Verifizierung der Identität des Benutzers angibt, außer Eingriff zu bringen.

3. Schlossanordnung nach einem der vorhergehenden Ansprüche, wobei der Spindelverriegelungsmechanismus (71) einen Begrenzungsabschnitt (84) umfasst, der konfiguriert ist, um mit der Spindel (300) in Eingriff zu kommen und eine Drehung davon zu verhindern, und ferner ein Vorspannmittel (99) umfasst, das konfiguriert ist, um den Begrenzungsabschnitt (84) in eine Eingriffsposition vorzuspannen, wobei der Begrenzungsabschnitt (84) mit der Spindel (300) in Eingriff ist.

4. Schlossanordnung nach Anspruch 3, wobei der elektronische Mechanismus (600) ferner ein elektrisches Antriebsmittel umfasst, das konfiguriert ist, um den Begrenzungsabschnitt (84) in eine Position außer Eingriff zu bewegen, in der die Spindel (300) drehbar ist, und
wobei das elektrische Antriebsmittel einen Motor (98), eine Stromquelle (412) und einen Energieübertragungsmechanismus umfasst, wobei der Energieübertragungsmechanismus mindestens ein Zahnrad (90, 94, 96) umfasst, das den Motor (98) und den Begrenzungsabschnitt (84) verbindet, und optional
wobei der Begrenzungsabschnitt (84) einen Schlitz oder Kanal (88) umfasst und das mindestens eine Zahnrad (90) einen Antriebsstift (92) umfasst, der innerhalb von dem Schlitz oder Kanal (88) aufgenommen werden kann und so konfiguriert ist, dass eine Drehung des mindestens einen Zahnrads (90) eine lineare Bewegung des Begrenzungsabschnitts (84) antreibt.

5. Schlossanordnung nach Anspruch 3 oder 4, wobei die Spindel (300) einen damit gekoppelten Rotor (78) umfasst, und wobei der Rotor (78) und der Begrenzungsabschnitt (84) ineinandergreifende Formationen (82, 86) umfassen, die eine relative Drehung verhindern, wenn der Begrenzungsabschnitt (84) mit der Spindel (300) in Eingriff ist.

6. Schlossanordnung nach einem der vorhergehenden Ansprüche, ferner umfassend einen Ausrichtungssensor, der konfiguriert ist, um die Ausrichtung der Spindel zu bestimmen, wobei der Ausrichtungssensor Folgendes umfasst:
einen Magneten (74), der mit der Spindel (300) gekoppelt ist, und
einen Hall-Sensor (70) oder Reed-Schalter, der konfiguriert ist, um die Position des Magneten (74) zu bestimmen.

7. Schlossanordnung nach Anspruch 6, wobei der elektronische Mechanismus (600) konfiguriert ist, um das Eingreifen des Spindelverriegelungsmechanismus (71) zu verhindern, wenn der Ausrichtungssensor feststellt, dass die Spindel (300) nicht mit dem Spindelverriegelungsmechanismus (71) ausgerichtet ist.

8. Schlossanordnung nach einem der vorhergehenden Ansprüche, wobei der elektronische Mechanismus (600) konfiguriert ist, um mit dem Spindelverriegelungsmechanismus (71) nach einer vorbestimmten Zeitspanne automatisch in Eingriff zu kommen.

9. Schlossanordnung nach einem der vorhergehenden Ansprüche, wobei der automatische Betätigungsmechanismus eine Antriebsplatte (6) umfasst, die funktionell mit dem Auslöser (10) und dem mindestens einen Riegel (4) verbunden ist und so konfiguriert ist, dass das Auslösen des mindestens einen Riegels (4) umfasst, dass die Antriebsplatte (6) unter der Schwerkraft oder einem Vorspannmechanismus fällt, um dadurch den Riegel (4) in eine ausgefahrene Position zu treiben, und wobei der Schlossmechanismus (1) so konfiguriert ist, dass eine Drehung der Spindel die Antriebsplatte (6) anhebt,
und wobei der Auslöser (10) die Antriebsplatte (6) bis zu ihrer Betätigung in einer angehobenen Position hält.

10. Schlossanordnung nach einem der vorhergehenden Ansprüche, wobei der Schlossmechanismus (1) einen mit einem Schlüssel betätigbaren Schlosszylinder umfasst, und wobei der Schlossmechanismus (1) und der Schlosszylinder so konfiguriert sind, dass eine Betätigung des Schlosszylinders den mindestens einen Riegel (4) ausfährt und/oder zurückzieht.

11. Schlossanordnung nach einem der vorhergehenden Ansprüche, wobei die Spindel (300) einen zerbrechlichen Abschnitt (302) aufweist, der konfiguriert ist, um bei Anwendung einer Kraft, die größer als ein vorbestimmter Wert ist, zu brechen, und wobei der zerbrechliche Abschnitt (302) so positioniert ist, dass, sobald er gebrochen ist, sich ein Abschnitt der Spindel (300) innerhalb der Griffanordnung befindet und mit dem Schlossmechanismus (1) verbunden ist.

12. Schlossanordnung nach Anspruch 11, wobei der Schlossmechanismus (1) Folgendesumfasst:
ein Gehäuse (2); und
eine innerhalb von dem Gehäuse (2) positionierte Spindelöffnung (16) zum Aufnehmen der Spindel (300) durch dieselbe; wobei der zerbrechliche Abschnitt (302) so positioniert ist, dass, wenn er gebrochen ist, sich die Spindel (300) nicht über die Spindelöffnung (16) hinaus erstreckt.

13. Schlossanordnung nach einem der vorhergehenden Ansprüche, umfassend ein Anschlagmittel, das konfiguriert ist, um das Entfernen der Spindel (300) einzuschränken, wobei das Anschlagmittel Folgendes umfasst:
einen vorspringenden Abschnitt (302a, 302b), der sich von der Spindel aus erstreckt; und/oder
einen Sperrabschnitt (60) in der Griffanordnung.

14. Schlossanordnung nach einem der vorhergehenden Ansprüche, wobei der Schlossmechanismus (1) Folgendes umfasst:
mindestens eine entfernte Verriegelungseinheit, die einen weiteren Riegel umfasst, und
eine Antriebsstange, die die entfernte Verriegelungseinheit und den automatischen Betätigungsmechanismus funktionell verbindet.

15. Tür- oder Fensteranordnung umfassend eine Schlossanordnung nach einem der vorhergehenden Ansprüche.

## Revendications

1. Assemblage de serrure (500) comprenant :
un mécanisme de serrure (1) comprenant :
au moins un pêne (4) ; et
un mécanisme d'actionnement automatique comprenant un déclencheur (10) configuré pour déclencher l'au moins un pêne (4) lorsque le déclencheur (10) est actionné ; et
un assemblage de poignées comprenant :
une première poignée (100) et une seconde poignée (200),
un arbre (300) qui peut être connecté aux poignées (100, 200) et qui est connecté au mécanisme de serrure (1) de telle sorte qu'une rotation de l'arbre (300) retire l'au moins un pêne (4) ; et
un mécanisme de blocage d'arbre (71) à l'intérieur de la première poignée (100) et configuré pour empêcher une rotation de l'arbre (300) lorsqu'il est mis en prise ;
dans lequel l'assemblage de serrure (500) comprend un mécanisme électronique (600) pour se mettre en prise et/ou se mettre hors prise avec le mécanisme de blocage d'arbre (71).

2. Assemblage de serrure selon la revendication 1, dans lequel le mécanisme électronique (600) comprend une unité d'authentification pour vérifier une identité d'utilisateur, l'unité d'authentification comprenant au moins un composant parmi : un capteur biométrique ; un récepteur ; et/ou un clavier ; et optionnellement, dans lequel le mécanisme électronique (600) est configuré pour se mettre hors prise avec le mécanisme de blocage d'arbre (71) suite à la réception d'un signal en provenance de l'unité d'authentification indiquant une vérification avec succès de l'identité d'utilisateur.

3. Assemblage de serrure selon l'une quelconque des revendications précédentes, dans lequel le mécanisme de blocage d'arbre (71) comprend une partie de limiteur (84) configurée pour se mettre en prise avec l'arbre (300) et pour empêcher une rotation de celui-ci, et comprenant en outre un moyen de sollicitation (99) configuré pour solliciter la partie de limiteur (84) dans une position de mise en prise dans laquelle la partie de limiteur (84) est mise en prise avec l'arbre (300).

4. Assemblage de serrure selon la revendication 3, dans lequel le mécanisme électronique (600) comprend en outre un moyen d'entraînement électrique configuré pour faire passer la partie de limiteur (84) dans une position de mise hors prise dans laquelle l'arbre (300) peut tourner, et
dans lequel le moyen d'entraînement électrique comprend un moteur (98), une source de puissance (412) et un mécanisme de transfert de puissance, dans lequel le mécanisme de transfert de puissance comprend au moins un engrenage (90, 94, 96) qui connecte le moteur (98) et la partie de limiteur (84), et optionnellement
dans lequel la partie de limiteur (84) comprend une fente ou un canal (88) et l'au moins un engrenage (90) comprend une goupille d'entraînement (92) qui peut être reçue à l'intérieur de la fente ou du canal (88) et qui est configurée de telle sorte qu'une rotation de l'au moins un engrenage (90) entraîne un déplacement linéaire de la partie de limiteur (84).

5. Assemblage de serrure selon la revendication 3 ou 4, dans lequel l'arbre (300) comprend un rotor (78) qui est couplé à celui-ci, et dans lequel le rotor (78) et la partie de limiteur (84) comprennent des formations d'inter-verrouillage (82, 86) qui empêchent une rotation relative lorsque la partie de limiteur (84) se met en prise avec l'arbre (300).

6. Assemblage de serrure selon l'une quelconque des revendications précédentes, comprenant en outre un capteur d'orientation configuré pour déterminer l'orientation de l'arbre, dans lequel le capteur d'orientation comprend :
un aimant (74) couplé à l'arbre (300), et
un capteur à effet Hall (70) ou un commutateur à lames configuré pour déterminer la position de l'aimant (74).

7. Assemblage de serrure selon la revendication 6, dans lequel le mécanisme électronique (600) est configuré pour empêcher que le mécanisme de blocage d'arbre (71) ne soit mis en prise lorsque le capteur d'orientation détermine que l'arbre (300) présente un défaut d'alignement avec le mécanisme de blocage d'arbre (71).

8. Assemblage de serrure selon l'une quelconque des revendications précédentes, dans lequel le mécanisme électronique (600) est configuré pour se mettre automatiquement en prise avec le mécanisme de blocage d'arbre (71) après une durée temporelle prédéterminée.

9. Assemblage de serrure selon l'une quelconque des revendications précédentes, dans lequel le mécanisme d'actionnement automatique comprend une plaque d'entraînement (6) connectée de manière opérationnelle au déclencheur (10) et à l'au moins un pêne (4), et configurée de telle sorte que le fait de déclencher l'au moins un pêne (4) comprend le fait que la plaque d'entraînement (6) tombe sous l'effet de la gravité ou d'un mécanisme de sollicitation pour ainsi entraîner le pêne (4) dans une position étendue, et dans lequel le mécanisme de serrure (1) est configuré de telle sorte qu'une rotation de l'arbre lève la plaque d'entraînement (6), et dans lequel le déclencheur (10) retient la plaque d'entraînement (6) dans une position relevée jusqu'à actionnement.

10. Assemblage de serrure selon l'une quelconque des revendications précédentes, dans lequel le mécanisme de serrure (1) comprend un barillet de serrure pouvant être actionné par une clé, et dans lequel le mécanisme de serrure (1) et le barillet de serrure sont configurés de telle sorte que le fonctionnement du barillet de serrure étend et/ou retire l'au moins un pêne (4).

11. Assemblage de serrure selon l'une quelconque des revendications précédentes, dans lequel l'arbre (300) comprend une partie frangible (302) configurée pour être rompue suite à l'application d'une force supérieure à une valeur prédéterminée, et dans lequel la partie frangible (302) est localisée de telle sorte qu'une fois rompue, une partie de l'arbre (300) est localisée à l'intérieur de l'assemblage de poignées et est connectée au mécanisme de serrure (1).

12. Assemblage de serrure selon la revendication 11, dans lequel le mécanisme de serrure (1) comprend :
un logement (2) ; et
une ouverture d'arbre (16) positionnée à l'intérieur du logement (2), pour recevoir l'arbre (300) au travers de celle-ci ; dans lequel la partie frangible (302) est positionnée de telle sorte que, lorsqu'elle est rompue, l'arbre (300) ne ss'étend pas au-delà de l'ouverture d'arbre (16).

13. Assemblage de serrure selon l'une quelconque des revendications précédentes, comprenant un moyen d'arrêt configuré pour limiter l'enlèvement de l'arbre (300), dans lequel le moyen d'arrêt comprend :
une partie en projection (302a, 302b) s'étendant depuis l'arbre ; et/ou
une partie de barrière (60) dans l'assemblage de poignées.

14. Assemblage de serrure selon l'une quelconque des revendications précédentes, dans lequel le mécanisme de serrure (1) comprend :
au moins une unité de verrouillage à distance comprenant un pêne supplémentaire ; et
une barre d'entraînement connectant de manière opérationnelle l'unité de verrouillage à distance et le mécanisme d'actionnement automatique.

15. Assemblage de porte ou de fenêtre comprenant un assemblage de serrure selon l'une quelconque des revendications précédentes.
